# EUROPEAN PATENT APPLICATION

(11) **EP 3 310 085 A1**
(43) Date of publication of application: **18.04.2018**
(21) Application number: 16193221.5
(22) Date of filing: 11.10.2016
(51) Int. Cl.: H04W 16/10, H04W 16/14, H04L 12/28, H04L 29/08

(54) **SYSTEM AND METHOD FOR REDUCING INTERFERENCES BETWEEN MULTIPLE WIRELESS PROTOCOLS OF A WIRELESS BUILDING AUTOMATION NETWORK**

(71) Applicant: ABB AB, 721 83 Västerås (SE)
(72) Inventor: PANG, Zhibo, 722 42 Västerås (SE); BAG, Gargi, 723 44 Västerås (SE); SCHMITT, Johannes, 68526 Ladenburg (DE)
(74) Representative: Jin, Xiao-Hong

(57) **Abstract**

The present invention relates a system (1) and a method for reducing interferences between multiple wireless protocols of a wireless building automation network of a building automation system, wherein the system comprises a plurality of building automation devices and a plurality of protocol adapters, each of the protocol adapters configured for one of the wireless protocols and may support multiple channels, and each of the building automation devices supporting at least one of the wireless protocols and associated with one the protocol adapters by the wireless protocols, the method comprising steps of scanning each of the protocol adapters to collect channel information (S10); for each of the channels, providing an acceptable interference level the network coordinator (S20), measuring a channel interference level by collecting a radio signal strength at a channel from a device associated with it (S30), and providing the measured interference level to the network coordinator (S40), and for each of the protocol adapters, comparing the measured interference level and the acceptable interference level of said particular channel and classify the channel accordingly (S50), structuring and update channel data based on the classification of the channels (S60), and sending the structured channel data to all of the protocol adapters (S70).

## Description

### FIELD OF THE INVENTION

The present invention relates to a system and method for reducing interferences between multiple wireless protocols of a Building Automation System, wherein a central device supports multiple wireless protocols that facilitate multiple frequencies.

### BACKGROUND

A Building Automation System (denoted as BAS) usually comprises a plurality of various building devices. Some of the building devices may be paired and wirelessly connected to each other. Thus, wirelessly connected devices form network nodes of the BA network from a viewpoint of network. Each of the building devices may support at least one wireless protocol operating at least one frequency range. For example, protocols Wi-Fi, ZigBee, Thread, Bluetooth and a proprietary wireless protocol may all operate at frequency 2.4GHz. Each frequency range is further divided into a number of channels, each of the channels having a channel width. When the BAS is deployed in a building/home, such wireless protocols may share the same frequency range or two frequency ranges are adjacent to each other or overlapped, which may result in, within the same radiation range, interferences between devices when they are communicating to each other at a time period/point.

For a particular protocol, a media access control (MAC) mechanism, such as the CSMA-CA (carrier sensing multiple access and collision avoidance), TDMA (time division multiple access), CDMA (code division multiple access) and FDMA (frequency division multiple access), is defined to minimize the probability of collisions so that the multiple network nodes can share the same frequencies or radio channel resources. However MAC mechanisms only work among the network nodes using the same protocol standard because then they can follow the same standard and rules to exchange information in order to decide which node can transmit a packet/message at a moment/time point.

However, no multiple access mechanisms are available for different and multiple wireless protocol. Devices using different protocol standards can't communicate to each other, MAC mechanisms thus will not work for multiple wireless protocols to minimize interferences.

Although wireless technologies have advantages over the wired counterpart in terms of ease and cost of installation and retrofit, however, it is desired for the BAS to reduce interferences or collisions when building devices communicating to each other using different wireless protocols.

### OBJECTS AND SUMMARY OF THE INVENTION

An object of the present disclosure is to reduce interferences/collisions between multiple wireless devices using multiple wireless protocols/standards in a BAS.

In a first aspect of the invention, there is a system provided for reducing interferences between multiple wireless protocols of a building automation network of a BAS as defined in the preamble of claim 1. The system comprises a plurality of protocol adapters, each being configured for one of the wireless protocols to communicate with a group of the devices supporting the wireless protocol, wherein each of the protocol adapters may support multiple channels. The system further comprises a network coordinator configured to scan each of the protocol adapters to collect channel information, wherein each of the protocol adapters is configured to, for each of the channels it supports, provide an acceptable interference level to the network coordinator, measure a channel interference level by collecting a radio signal strength at a channel from a device associated with it, and provide the measured interference to the network coordinator. Furthermore, the network coordinator is configured to for each of the protocol adapters, compare the measured interference level and the acceptable interference level of said particular channel and classify the channel accordingly, structure and update channel data based on the classification of the channels, and send the structured channel data to all of the protocol adapters.

Due to the fact that all of information about channel interferences is collected and analyzed by a central point, i.e. the network coordinator, by sending the structured and classified channel data to all of the protocol adapters, usage of channels is coordinated among the protocol adapters, which consequently reduces interferences or collisions when the same or adjacent or over-lapping channels are shared.

Furthermore, using predefined application layer APIs of the wireless protocols to configure the channels to be used does not need a further modifications of the protocols. A further advantage is that it enables compatibility with an existing system.

Each of the protocol adapters is either a physically separated device or a module embedded in the network coordinator. In case that the system comprises a system access point configured to manage the building automation system, the network coordinator may be integrated into the system access point. A further advantage is that there is no need to have extra hardware device to execute the proposed solution, which is more cost effective.

According to one embodiment of the invention, each of the protocol adapters is further configured to make a decision on utilization of the channels it supports and report back the decision to the network coordinator.

According to one embodiment of the invention, the network coordinator is further configured to update the structured channel data regularly or based on a change of a deployment of the build automation system and/or communication performances.

Furthermore, the channel information is either pre-collected or collected upon a request.

In a second aspect of the invention, there is a method provided for reducing interferences between multiple wireless protocols of a wireless building automation network, wherein the system comprises a plurality of building automation devices and a plurality of protocol adapters, each of the protocol adapters configured for one of the wireless protocols and may support multiple channels, and each of the building automation devices supporting at least one of the wireless protocols and associated with one the protocol adapters by the wireless protocols, the method comprising steps of scanning each of the protocol adapters to collect channel information; for each of the channels, providing an acceptable interference level the network coordinator; measuring a channel interference level by collecting a radio signal strength at a channel from a device associated with it, and providing the measured interference level to the network coordinator, and for each of the protocol adapters, comparing the measured interference level and the acceptable interference level of said particular channel and classify the channel accordingly, structuring and update channel data based on the classification of the channels, and sending the structured channel data to all of the protocol adapters.

According to one embodiment of the invention, the method further comprising making a decision on utilization of the channels it supports and report back the decision to the network coordinator.

### BRIEF DESCRIPTION OF THE DRAWINGS

The invention will now be explained more closely by the description of different embodiments of the invention and with reference to the appended figures.
Fig. 1 shows a system schematic view of a building automation system according to one example of the invention.
Fig. 2 illustrates a main flowchart according to another example of the invention.
Fig. 3 illustrates a flowchart of classifying channels based on collected channel information.
Fig. 4 illustrates an example of a structured channel data.
Fig. 5 is a data diagram illustrating meanings of the classified channels of Fig. 3.

### DETAILED DESCRIPTION OF PREFERRED EMBODIMENTS OF THE INVENTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art.

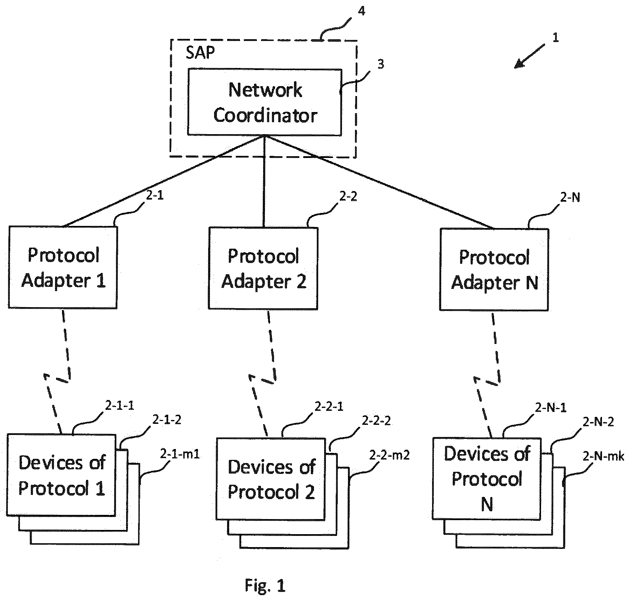

Figure 1 shows a system schematic view of a BAS 1 including a building automation network comprising a plurality of building devices 2-1-1, 2-1-2, ..., 2-1-m1; 2-2-1, 2-2-2, ..., 2-2-m2; ...; 2-N-1, 2-N-2, ..., 2-N-mk. Each of the building devices supports at least one wireless protocol to communicate other devices. Examples of BASs are various smart building/home. Examples of building devices are electric devices for heating, ventilation and air conditioning, lighting, alarm and security and control counterparts and, measuring devices like sensors. For example, a lamp is controlled by a switch by wireless communication. The position of blind and/or curtains can be adjusted by up/down and/or left/right buttons through wireless communication. The control panel of air conditioner can be connected by wireless communication. The temperature, humidity, air quality sensors, smoke detectors, fire alarms, and many more can also be connected by wireless communication.

The system 1 further comprises a plurality of protocol adapters (denoted as PA) 2-1, 2-2, ..., 2-N, each being configured for one of the wireless protocols to communicate with a group of the devices 2-1-1, 2-1-2, ..., 2-1-m1; 2-2-1, 2-2-2, ..., 2-2-m2; ...; 2-N-1, 2-N-2, ..., 2-N-mk by a particular wireless protocol, which means that each of the groups 2-1-1, 2-1-2, ..., 2-1-m1; 2-2-1, 2-2-2, ..., 2-2-m2; ...; 2-N-1, 2-N-2, ..., 2-N-mk thus associates with the corresponding PAs 2-1, 2-2, ...2-N and the devices within a group may be wirelessly connected each other using that particular wireless protocol. Depending on the protocol standard each of the PAs may support multiple channels.

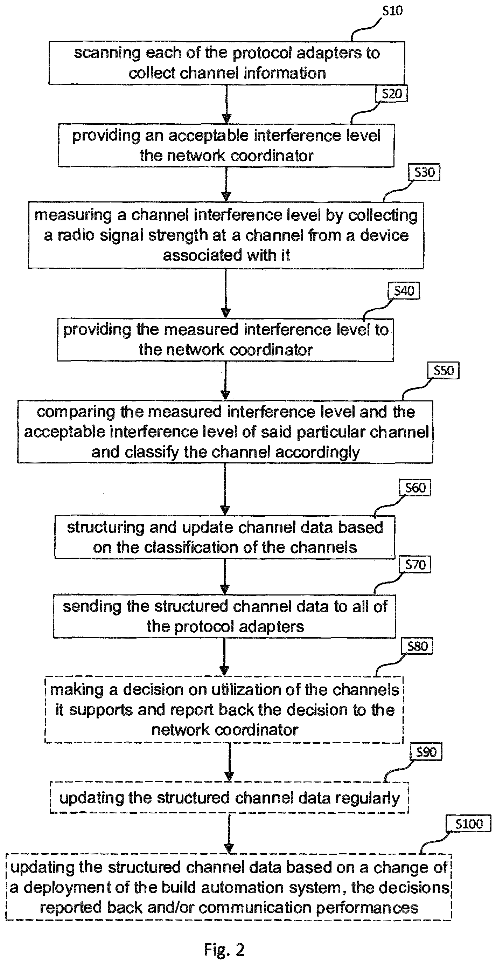

With a further reference to Figure 2, the system further comprises a Network Coordinator (denoted as NC) 3 configured to scan each of the protocol adapters to collect channel information, step S10. Meanwhile, all other PAs and the devices associated with are notified to avoid as much communication as possible. One possible way to avoid communications and further interferences during this short period is to set them into idle mode. By this way, the NC 3 communicate one PA upon a time until it collects channel information from all the PAs. Moreover, depend on a network traffic status, the NC 3 may not request a second PA to send channel information immediately after a first PA has sent the request channel information to further minimize an intensive network traffic. The NC 3 may wait until the network traffic goes back to a normal status.

Upon being requested, PA 2-1, 2-2, ..., 2-N is configured to, for each of the channels it supports, provide an acceptable interference level (denoted as AIL) to the network coordinator 3, step S20. The AIL may be stored with the PA. Further, the PA measures a channel interference level, which is achieved by collecting a radio signal strength at that channel from a device associated with it, step S30. This measured interference level (denoted as MIL) will be further sent to the NC 3, step S40. Both the AIL and the MIL may be updated regularly in to order to reflect a current communication traffic status. PAs may either pre-collect the channel information or collect them upon a request.

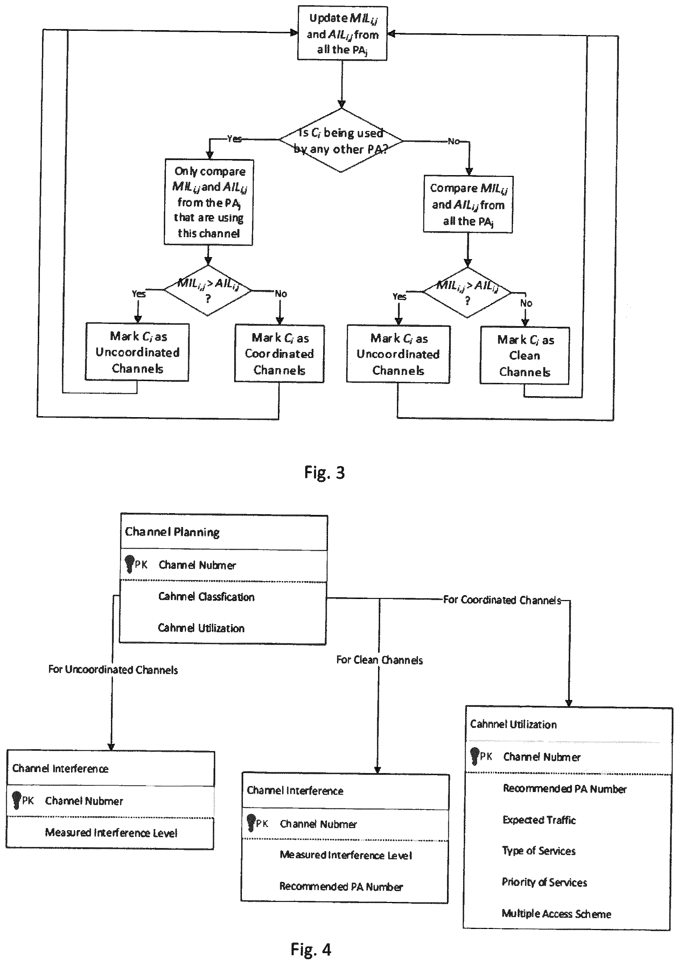

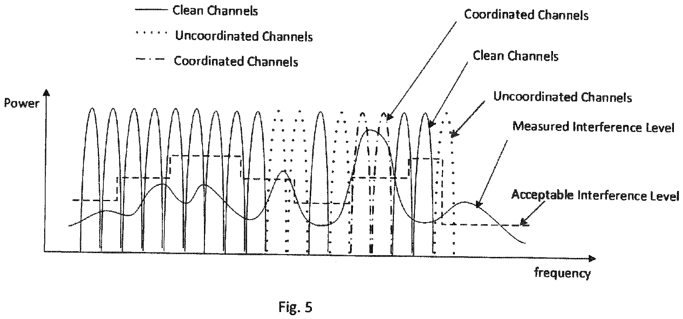

Upon receiving the AIL and the MIL, the NC 3 is further configured to compare the AIL and MIL of that particular channel and classify the channel accordingly, step S50. Thus, the comparison identifies a current interference status of the channel and detects if an interference occurs at this channel. Then, it structures and updates channel data based on the classification of the channels, step S60 and sends further the structured channel data to all of the PAs, step S70. Figure 3 illustrates a flowchart of classifying channels based on collected channel information. However, this is just one example of classifying channels, any other method achieving a similar purpose is also possible. In this example, as a result of the classification process, each of the channels will be identified as "Clean Channel", "Coordinated Channel", or "Uncoordinated Channel". A Clean Channel is a channel not being used, a Coordinated Channel is a channel to be used by at least one of the devices in the system, while an Uncoordinated Channel is a Channel at which an interference has been detected. Figure 5 is a data diagram illustrating meanings of the classified channels of Fig. 3 in view of a relation between AIL and NIL; while Figure 4 illustrates an example of a structured channel data.

The NC 3 then coordinates the usage of the channels by sending the structured channel data to all of the PAs, which may include a updated channel classification, a channel that will be used by a PA, an expected traffic at a channel and services and priority of the services by the PA at that channel and multiple access scheme (e.g. CSMA-CA, TDMA, FDMA, CDMA). For a Clean Channel, NC 3 will recommend a specific PA to use it. If there are not enough Clean Channels, The NC 3 may recommend multiple PAs to share the Coordinated Channel(s), which can be achieved for example by setting up time intervals or priorities of a service. The NC 3 will not recommend PAs to use any Uncoordinated Channels. In this way, uses of the channels are coordinated.

In any case, the NC 3 will not force a PA to use or not use a particular channel. A final decision will be left to a PA according to its channel access scheme and tolerance to interferences and packet loss, which enables a flexible solution for a system integrator of the BAS meaning that the system may comprise any PA and/or device. Moreover, each of the PAs is further configured to report its final decision to the NC 3 so that the NC 3 may continuously update the structured channel data together with other information like change of a deployment of the BAS and/or communication performances. Alternatively, the NC3 may update the structured channel data on a regular base.

Each of the PAs 2-1, 2-2, ..., 2-N may be either a device physically separated from the NC 3 or a module embedded in the NC 3. In case that the BAS comprises a System Access Point (SAP) configured to manage the BAS. In any case, the NC 3 is conveniently implemented or integrated in the BAS 1, e.g. in the SAP, using one or more conventional general purpose or specialized digital computer, computing device, machine, or microprocessor, including one or more processors, memory and/or computer readable storage media programmed according to the teachings of the present disclosure.

Furthermore, the present invention includes a computer program product which is a non-transitory storage medium or computer readable medium (media) having instructions stored thereon/in which can be used to program a computer to perform the methods of the present invention. Examples of the storage medium may include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data.

## Claims

1. A system (1) for reducing interferences between multiple wireless protocols of a wireless building automation network of a building automation system, wherein the system (1) comprises a plurality of building automation devices (2-1-1,2-1-2, ..., 2-1-m1; 2-2-1, 2-2-2, ..., 2-2-m2; ...; 2-N-1, 2-N-2, ..., 2-N-mk), each of the building automation devices supporting at least one of the wireless protocols, **characterized in that**
- the system comprises a plurality of protocol adapters (2-1, 2-2, ..., 2-N), each being configured for one of the wireless protocols to communicate with a group of the devices (2-1-1, 2-1-2, ..., 2-1-m1; 2-2-1, 2-2-2, ..., 2-2-m2; ...; 2-N-1, 2-N-2, ..., 2-N-mk) supporting the wireless protocol, wherein each of the protocol adapters may support multiple channels,
- the system further comprises a network coordinator (3) configured to scan each of the protocol adapters (2-1, 2-2, ..., 2-N) to collect channel information,
- each of the protocol adapters (2-1, 2-2, ..., 2-N) is configured to, for each of the channels it supports,
o provide an acceptable interference level the network coordinator,
o measure a channel interference level by collecting a radio signal strength at a channel from a device associated with it, and
o provide the measured interference level to the network coordinator, and
- the network coordinator (3) is further configured to
o for each of the protocol adapters (2-1, 2-2, ..., 2-N), compare the measured interference level and the acceptable interference level of said particular channel and classify the channel accordingly,
o structure and update channel data based on the classification of the channels, and
o send the structured channel data to all of the protocol adapters (2-1, 2-2, ..., 2-N).

2. System according to claim 1, wherein each of the protocol adapters (2-1, 2-2, ..., 2-N) is further configured to make a decision on utilization of the channels it supports and report back the decision to the network coordinator (3).

3. System according to claim 1 or 2, wherein the network coordinator (3) is further configured to update the structured channel data regularly.

4. System according to claim 1 or 2, wherein the network coordinator (3) is further configured to update the structured channel data based on a change of a deployment of the build automation system and/or communication performances.

5. System according to claim 1, wherein the channel information is collected either upon a request or pre-collected.

6. System according to claim 1, each of the protocol adapters (2-1, 2-2, ..., 2-N) is either a physically separated device or a module embedded in the network coordinator.

7. System according to claim 1, wherein the system (1) further comprises a system access point (4) configured to manage the building automation system, to connect to a back end system, and to provide interfaces to installers and users and the network coordinator (3) is integrated into the system access point (4).

8. A method for reducing interferences between multiple wireless protocols of a wireless building automation network, wherein the system comprises a plurality of building automation devices and a plurality of protocol adapters, each of the protocol adapters configured for one of the wireless protocols and may support multiple channels, and each of the building automation devices supporting at least one of the wireless protocols and associated with one the protocol adapters by the wireless protocols, the method comprising steps of
- scanning each of the protocol adapters to collect channel information (S10),
- for each of the channels,
o providing an acceptable interference level the network coordinator (S20),
o measuring a channel interference level by collecting a radio signal strength at a channel from a device associated with it (S30), and
o providing the measured interference level to the network coordinator (S40), and
- for each of the protocol adapters, comparing the measured interference level and the acceptable interference level of said particular channel and classify the channel accordingly (S50),
- structuring and update channel data based on the classification of the channels (S60), and
- sending the structured channel data to all of the protocol adapters (S70).

9. Method according to claim 8, further comprising making a decision on utilization of the channels it supports and report back the decision to the network coordinator (S80).

10. Method according to claim 8 or 9, further comprising updating the structured channel data regularly (S90).

11. Method according to claim 8 or 9, further comprising updating the structured channel data based on a change of a deployment of the build automation system, the decisions reported back and/or communication performances (S100).
